# EUROPEAN PATENT APPLICATION

(11) **EP 2 645 467 A1**
(43) Date of publication of application: **02.10.2013**
(21) Application number: 13154962.8
(22) Date of filing: 12.02.2013
(51) Int. Cl.: H01M 10/44, H01M 10/48, H02J 7/14, H02J 7/32

(54) **Battery pack charging system and method of controlling the same**

(30) Priority: 26.03.2012 US 201261615685 P
(71) Applicant: Samsung SDI Co., Ltd., Yongin-si, Gyeonggi-do (KR)
(72) Inventor: Ju, Ri-A, Gyeonggi-do (KR); Kim, Hyun, Gyeonggi-do (KR); Kim, Suk-Kyum, Gyeonggi-do (KR); Park, Seong-Joon, Gyeonggi-do (KR); Kim, Young-Il, Gyeonggi-do (KR)
(74) Representative: Hewett, Jonathan Michael Richard

(57) **Abstract**

A battery of a battery pack is charged by a power-generating means when a monitored parameter, such as a state of charge, reduces below a predetermined threshold. Monitoring of the parameter and control of the charging is performed by a battery management system. The invention is appropriate for use in vehicle engine systems, where the battery is charged through the mechanical power of the engine of the vehicle. When the parameter reaches the threshold, the starter motor of the vehicle is controlled by the battery management system, initialising the engine. The automatic charging process ensures that a battery, which would otherwise discharge due to dark current flowing to an electrical load, can be maintained in an operable state.

## Description

The present invention relates to a battery pack, a battery pack charging system and a method of controlling the same.

In general, unlike primary batteries, which are not rechargeable, secondary batteries are rechargeable and dischargeable. According to the types of external devices to which the secondary batteries are applied, the secondary batteries are used as a single battery or in the form of a battery module in which a plurality of batteries are connected as a unit.

According to the conventional art, as a power supply unit for starting up an engine, a lead storage battery is used. Recently, to improve fuel efficiency, an Idle Stop & Go (ISG) system has been applied, and the use of the ISG system is gradually increasing. A power supply unit that supports an ISG system, which is an idling limiting device, has to maintain strong charging or discharging characteristics despite high output characteristics for engine start up and frequent start ups, and has a long life span. However, charging or discharging characteristics of lead storage batteries according to the conventional art deteriorate due to repeated engine stops or restart-ups under the ISG system, and cannot be used for a long time.

In an electrical device using electricity, when a system is turned off, power related to basic operations of the electrical device is turned off. When the device is turned on again, a current for immediately starting an operation of the electrical device and continuing the basic operations of the electrical device is supplied. However, when the system is turned off, some device components may continue to consume an electric current, referred to as a "dark current", or "leakage current".

According to an aspect of the present invention, there is provided a battery pack, comprising a secondary battery and a battery management system for monitoring a parameter representing use of the secondary battery, in which the battery management system is arranged to determine whether the secondary battery requires charging by comparing the monitored parameter with a first predetermined value, and if it is determined that the secondary battery requires charging, the battery management system is arranged to control charging of the secondary battery by a power generating means, wherein the first predetermined value is such that the secondary battery is capable of initialising the power generating means when the monitored parameter is equal to the first predetermined value.

Before initialisation of the power generating means, it may be the case that no power is provided by the power generating means to the secondary battery.

The monitored parameter may correspond to the state of charge of the secondary battery.

The state of charge of the secondary battery may vary linearly with time.

The monitored parameter may correspond to the time which has elapsed since the secondary battery was charged to a predetermined level.

The battery management system may be arranged to control the power generating means to stop charging the secondary battery when the monitored parameter is equal to a second predetermined value.

According to another aspect of the present invention, there is provided a system comprising the above-mentioned battery pack, a power generation means arranged to supply charging power to the battery pack, and an initialisation means coupled in parallel with the power generation means and arranged to initialise the power generation means on receipt of a control signal from the battery management system.

The initialisation means may comprise the starter motor of a vehicle, and the power generation means may be arranged to generate electrical power from the mechanical power provided by an engine of the vehicle.

The power generation means may be arranged to generate electrical power from the mechanical power provided by an Idle Stop and Go, ISG, engine.

When the monitored parameter of the secondary battery reaches the first predetermined value, discharging power from the secondary battery may be supplied to the initialisation means.

According to another aspect of the present invention, there is provided a method of charging a battery, comprising monitoring a parameter representing use of a secondary battery, determining whether the secondary battery requires charging by comparing the monitored parameter with a first predetermined value, and if it is determined that the secondary battery requires charging, controlling charging of the secondary battery by a power generating means, wherein the first predetermined value is such that the secondary battery is capable of initialising the power generating means when the monitored parameter is equal to the first predetermined value.

The monitored parameter may correspond to the state of charge of the secondary battery.

The monitored parameter may correspond to the time which has elapsed since the secondary battery was charged to a predetermined level.

The battery management system may be arranged to control the power generating means to stop charging the secondary battery when the monitored parameter is equal to a second predetermined value.

Embodiments of the present invention will be described by way of example only, with reference to the accompanying drawings, in which:
FIG. 1 is a schematic view illustrating a structure of a battery pack according to an embodiment of the present invention and a connection between the battery pack and external peripheral devices;
FIG. 2 is a graph showing a state-of-charge (SOC) of a battery module when an engine of a vehicle is stopped;
FIG. 3 is a graph showing an SOC of a battery module according to an embodiment of the present invention, when the battery module is automatically charged;
FIG. 4 is a graph showing an SOC of a battery module according to another embodiment of the present invention, when the battery module is automatically charged;
FIG. 5 is a flowchart illustrating a method of controlling a battery charging system, according to an embodiment of the present invention; and
FIG. 6 is a flowchart illustrating a method of controlling a battery charging system, according to another embodiment of the present invention.

The present invention will now be described more fully with reference to the accompanying drawings, in which exemplary embodiments of the invention are shown. The embodiments will be described in detail such that one of ordinary skill in the art may easily work the present invention. It should be understood that the embodiments of the present invention may vary but do not have to be mutually exclusive. For example, particular shapes, structures, and properties according to a predetermined embodiment described in this specification may be modified in other embodiments without departing from the scope of the prevent invention. In addition, positions or arrangement of individual components of each of the embodiments may also be modified without departing from the scope of the present invention as defined by the claims. In the drawings, like reference numerals denote like elements in various aspects.

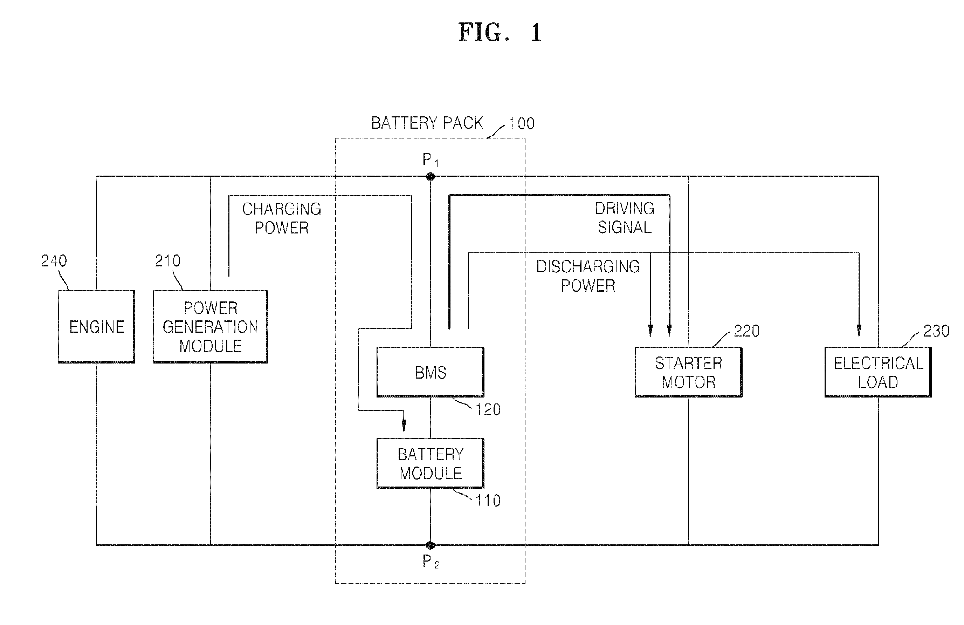

FIG. 1 is a schematic view illustrating a structure of a battery pack 100 according to an embodiment of the present invention and a connection between the battery pack 100 and external peripheral devices.

The battery pack 100 includes a battery module 110 that is connected between first and second terminals P1 and P2 to receive charging power and output discharging power. The battery pack 100 may be electrically connected in parallel to a power generation module 210, an engine 240, and a starter motor 220 via the first and second terminals P1 and P2. Also, as illustrated in FIG. 1, the battery pack 100 includes a battery management system (BMS) 120 and the battery module 110.

The battery pack 100 may store charging power generated from the power generation module 210 and supply discharging power to the starter motor 220. For example, the power generation module 210 may be connected to engine 240 to provide power thereto, and may be connected to a driving axis of the engine 240 to convert rotational motive power into an electrical output. Here, charging power generated by the power generation module 210 may be stored in the battery module 110 via the first and second terminals P1 and P2 of the battery pack 100. For example, the power generation module 210 may include a direct current (DC) generator (not shown) or an alternating current (AC) generator (not shown) and a rectifying unit (not shown), and may supply power of about 15 V DC, specifically, voltage of about 14.6 V DC to 14.8 V DC.

For example, the battery pack 100 may be used as a power unit for starting up engine 240 of an Idle Stop & Go (ISG) system, in which an ISG function is implemented to improve fuel efficiency. In the ISG system, as the engine 240 is repeatedly and frequently stopped and restarted, charging and discharging of the battery pack 100 are repeated.

A lead storage battery applied to conventional ISG systems has problems such as a decrease in durability and a life span and a decrease in charging and discharging characteristics due to frequent repetition of charging and discharging operations, and for example, a charging capacity is decreased due to repeated charging or discharging, and thus, starting up of an engine 240 is degraded, and an exchange cycle of the lead storage battery is shortened.

For example, compared to the lead storage battery, the battery module 110 according to the current embodiment of the present invention includes a lithium ion battery which maintains relatively uniform charging or discharging characteristics, and thus, has little deterioration and may be suitable for an ISG system where stopping and re-startup of engine 240 is repeated. Also, compared to a lead storage battery of the same charging capacity, the battery module 110 according to the current embodiment of the present invention obtains the same charging capacity with less volume than the lead storage battery, and thus, a mounting space of the battery module 110 may be reduced. However, not only a lithium ion battery but also a nickel metal hydride (NiMH) battery may be used as the battery module 110 according to the current embodiment of the present invention.

The battery module 110 may include a plurality of battery cells (not shown) that are connected serially or parallel, and a rated charging voltage and a charging capacity of the battery cells may be adjusted through combinations of serial and parallel connections.

The battery module 110 is a general name of a structure including a plurality of battery sub-units. For example, when the battery pack 100 is a battery rack including a plurality of battery trays, the battery rack may be regarded as the battery module 110. Also, when a battery tray includes a plurality of battery cells, the battery tray may be regarded as the battery module 110.

Also, the BMS 120 monitors a battery state and controls charging and discharging operations thereof. According to the current embodiment of the present invention, the BMS 120 monitors a state-of-charge (SOC) of the battery module 110 and automatically drives the starter motor 220 to determine whether to receive charging power from the power generation module 210 or not. The function and operation of the BMS 120 will be described in detail after describing each peripheral device.

Next, the power generation module 210 may operate according to the principles of a device such as an alternator of a vehicle. An alternator not only supplies charging power to the battery pack 100 but also power to an electrical load 230 while engine 240 is driven, as described below.

Also, according to the current embodiment of the present invention, when an SOC of the battery module 110 is reduced to be a predetermined value or lower, the power generation module 210 receives rotational driving power from engine 240 by automatic driving of the starter motor 220 to supply charging power to the battery pack 100.

Next, the starter motor 220 is driven when engine 240 of a vehicle is started up, and may provide an initial rotational motive power that rotates a driving axis of the engine 240. For example, the starter motor 220 may receive stored power via the first and second terminals P1 and P2 of the battery pack 100 and rotate a driving axis of an engine when the engine is started up or when the engine 240 is restarted after an idle stop, thereby re-driving the engine 240. In detail, when a user starts up a vehicle or at a moment of an idle go, the starter motor 220 provides an initial rotational motive power of the engine 240. According to the current embodiment of the present invention, while the engine 240 is operated by the starter motor 220, the power generation module 210 may be driven to generate charging power.

As described above, as the starter motor 220 receives an initial ignition motive power via the first and second terminals P1 and P2 of the battery pack 100, when the battery module 110 is completely discharged, the engine 240 may not be operated or operated again via the starter motor 220. In particular, in the case of an ISG vehicle, re-operation of the engine 240 is to be performed frequently, and thus, if the battery module 110 is completely discharged, and thus, the starter motor 220 is not to be operated, serious problems may occur, for example, the vehicle may not be able to start in an idle stop state.

According to the current embodiment of the present invention, if an SOC of the battery module 110 is decreased to a charging limit or below, the starter motor 220 may be automatically operated. The starter motor 220 may be connected **to** the BMS 120, and when a signal indicating that an SOC of the battery module 110 is decreased to a charging limit or below is received from the BMS 120, the starter motor 220 automatically operates to work the engine 240, thereby driving the power generation module 210.

As described above, as the BMS 120 monitors an SOC of the battery module 110 so as to automatically operate the starter motor 220, the SOC of the battery module 110 may be always maintained at a discharging limit or higher. That is, the power generation module 210 is driven to supply charging power to the battery module 110, and thus, even when the battery is discharged while operation of the engine 240 is stopped, a charging value of the battery module 110 for starting or restarting the engine 240 may be always be maintained.

Together with the power generation module 210 and the starter motor 220, the electrical load 230 may be connected to the battery pack 100. The electrical load 230 consumes power stored in the battery pack 100, may receive stored discharging power via the first and second terminals P1 and P2, and may include various components for electrical devices.

Examples of the electrical load 230 include an air conditioner for vehicles, a radio, a remote reception terminal, or the like, but are not limited thereto; the electrical load 230 may refer to any type of a load that operates upon receiving power from the power generation module 210 or the battery module 110.

The electrical load 230 may consume a dark current while engine 240 of a vehicle is stopped. In a vehicle, if engine 240 of the vehicle is stopped, a flow of a current supplied to a starting device and other loading apparatuses is stopped in a battery, but a current for immediately starting up engine 240 may continue to be consumed by the starter motor 220, and a dark current may be continuously consumed by the electrical load 230.

The dark current consumed by the electrical load 230 as described above is consumed while the engine 240 is stopped, and since the power generation module 210 does not supply charging power to the battery module 110 at this time, there is a risk of completely discharging the battery module 110. In particular, when a lithium ion battery is used in a vehicle in which an ISG mode is applied, due to low capacity thereof, a battery may be completely discharged by a dark current while the engine 240 of the vehicle is stopped.

According to the current embodiment of the present invention as described above, if an SOC of the battery module 110 is decreased to a discharging limit or below due to the dark current, the starter motor 220 is automatically driven to thereby charge the battery module 110.

Hereinafter, a typical function of the BMS 120 and a method in which the BMS 120 charges the battery module 110 by monitoring an SOC of the battery module 110 and transmitting a control signal to the above-described peripheral devices will be described in detail.

The BMS 120 is connected to the battery module 110, and controls charging and discharging operations of the battery module 110. In addition, the BMS 120 may perform functions such as overcharge protection function, over-discharge protection function, over-current protection function, over-voltage protection function, overheating protection function, and cell balancing. To this end, the BMS 120 may include a measuring unit that monitors or measures parameters such as a voltage, a current, a temperature, a remaining amount of power, a lifespan, an SOC, or the like from the battery module 110, and may generate a control signal based on a measurement result to control external devices such as the starter motor 220 and the power generation module 210 of the current embodiment of the present invention.

The BMS 120 determines a limit of an SOC so that the starter motor 220 may drive itself. In other word, the limit is a predetermined threshold, such that when the SOC of the battery module 110 reaches the threshold, there is sufficient power in the battery module 110 to power the starter motor 220 to initialise the power generation module 210. In an ISG vehicle according to the conventional art, a user has to start up engine 240 himself or herself or only the starter motor 220 may drive engine 240, or the starter motor 220 drives engine 240 only in an idle go state, and the engine 240 drives the power generation module 210. However, according to the current embodiment of the present invention, the starter motor 220 may be automatically driven by a control signal of the BMS 120.

In an ISG vehicle, when a lithium ion battery is used as the battery module 110, advantages such as high output characteristics for implementing the same charging capacity with less volume and shorter charging time than a lead storage battery are available but since the capacity of the battery module 110 is smaller than that of a lead storage battery, the battery module 110 is discharged fast.

As a result, a period in which a lithium ion battery is completely discharged may be shorter than in a lead storage battery due to the electrical load 230 which requires power supply of a battery. In particular, due to a dark current that is consumed by the electrical load 230 which requires power even when turning off the engine 240 of the vehicle, the lithium ion battery is highly likely to completely discharge since the dark current consumes power uniformly even in a section where the vehicle is not driven. As an example, a lithium ion battery is completely discharged within two or three weeks while the engine 240 of the vehicle is not started.

According to the current embodiment of the present invention, in order to solve this problem, the BMS 120 may monitor an SOC of the battery module 110 and sense when the SOC is decreased to a discharging limit or below. Here, the discharging limit is a predetermined reference value for charging the battery module 110 by automatically driving the power generation module 210; for example, the discharging value is a value indicating to start charging the battery module 110 when a voltage value has reached the discharging limit, by determining that there is a risk of completely discharging the battery module 110.

The BMS 120 may generate a control signal for driving the starter motor 220 when the SOC has reached the discharging limit. When the starter motor 220 is driven by the control signal, the power generation module 210 is driven by rotation of the engine 240, thereby supplying discharging power to the battery module 110.

In addition, the BMS 120 may set a charging limit to determine a power section to be used by the battery module 110. That is, the BMS 120 receives charging power from the power generation module 210 to charge the battery module 110 as described above, and when the BMS 120 senses that the SOC has reached a predetermined charging limit, the BMS 120 may generate a control signal indicating to stop driving of the power generation module 210 to end the charging.

The charging limit and the discharging limit set by the BMS 120 may be an SOC or another parameter for determining an SOC. Thus, in order to determine an SOC, the BMS 120 may use an SOC determination method such as a voltage measuring method, a current integration method, a current integration, and a Calman filter application method. However, the method of determining an SOC is exemplary, and is not limited to the above.

Also, as other parameters for determining an SOC, a charging limit and a discharging limit may be voltages. That is, the BMS 120 may measure a voltage of the battery module 110 by using the above-described measuring unit, and may determine whether the battery module 110 has reached the charging limit or the discharging limit according to the measured voltage.

It is possible for parameters other than the SOC of the battery to be measured in order to determine the use of the battery module 110, and in turn, the predetermined parameter values at which charging is to begin and end. According to another embodiment of the present invention, a predetermined period after the engine 240 of the vehicle is stopped, the BMS 120 may automatically generate a control signal for driving the starter motor 220 to charge the battery module 110. Accordingly, when the battery module 110 has linear SOC characteristics, the BMS 120 may charge the battery module 110 for a standard time period after the engine 240 is stopped, without having to monitor the SOC.

For example, the battery module 110 has linear SOC characteristics when a material of a battery includes soft carbon. The BMS 120 may set a time when an SOC (of the battery module) reaches a discharging limit by using characteristics of the battery module 110 after the engine 240 is stopped, and may generate a control signal for starting charging of the battery module 110 automatically at the previously set time. Likewise, the BMS 120 may set a time when (the SOC) reaches a charging limit after starting the charging, and may generate a control signal for automatically ending the charging of the battery module 110 at the previously set time. The time period may be calculated from the point at which the battery module 110 has a predetermined charge level, such as 100% (fully charged).

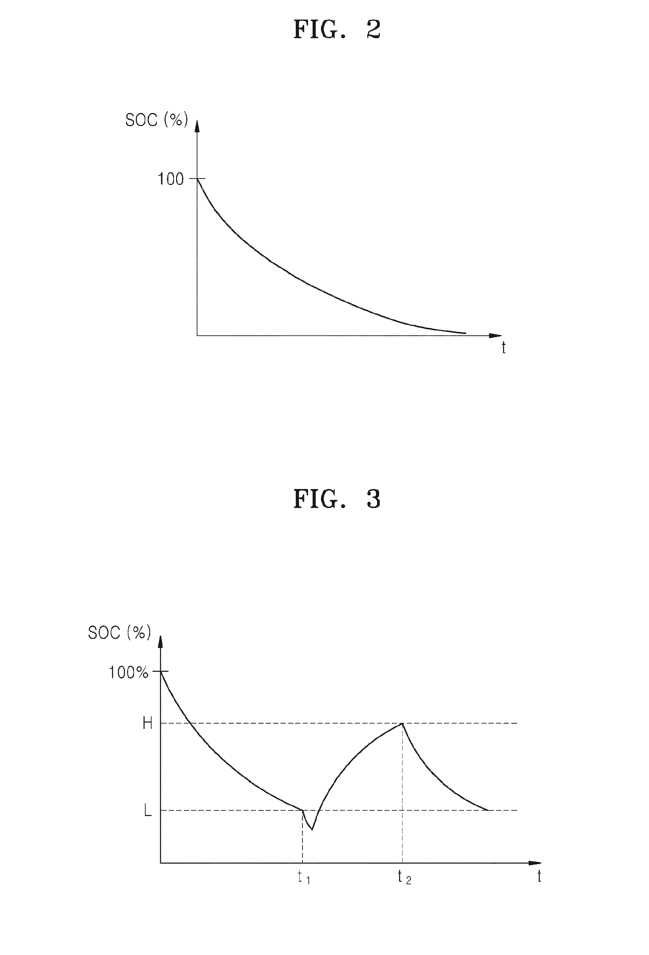

FIG. 2 is a graph showing an SOC of a battery module when an engine of a vehicle is stopped.

Referring to FIG. 2, a horizontal axis denotes time, and a vertical axis denotes SOC. Referring to FIG. 2, an SOC of the battery module 110 continuously decreases with time due to a dark current even when the engine 240 is stopped.

In particular, as described above, when a lithium ion battery is used in an ISG vehicle, the lithium ion battery has lower capacity than a conventional lead storage battery, and thus, a graph of SOC in % may abruptly converge to o. Accordingly, due to the complete discharging of the battery, the engine 240 may not be started up or restarted.

FIG. 3 is a graph showing an SOC of a battery module according to an embodiment of the present invention, when the battery module is automatically charged.

Also, referring to FIG. 3, a discharging limit of the battery module 110 is set as L. For example, a discharging limit L may be 30% when a completely charged SOC is 100%. The BMS 120 may monitor an SOC of the battery module 110, and when the SOC decreases to an L value or below, the starter motor 220 may be driven to thereby automatically drive the power generation module 210.

When the power generation module 210 is driven to supply charging power to the battery module 110, the BMS 120 generates a control signal for stopping driving of the power generation module 210, whereby an SOC is increased by a charging limit value H. Referring to FIG. 3, when the SOC corresponds to the discharging limit L, the power generation module 210 is driven to charge the battery module 110, and the driving of the power generation module 210 is stopped at a time t2 where the SOC of the battery module 110 reaches the charging limit H so as to detect charging of the battery module 110 again.

For reference, the SOC is slightly decreased after a time t1 in FIG. 3 and then charging starts because the battery module 110 supplies driving power to the starter motor 220.

Accordingly, a discharging limit L may be greater than power used to start up engine 240 by the driving of the starter motor 220.

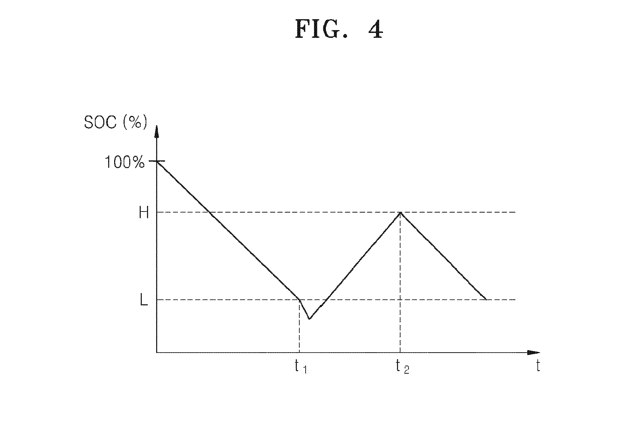

FIG. 4 is a graph showing an SOC of a battery module according to another embodiment of the present invention, when the battery module is automatically charged.

Referring to FIG. 4, an SOC of the battery module 110 according to another embodiment of the present invention has linear characteristics. Likewise, when the SOC graph has linear characteristics, even when the BMS 120 does not monitor the SOC of the battery module 110, it may be determined based on a previously provided reference value whether charging of the battery module 110 is necessary when a predetermined period of time passes.

For example, when it is known that the SOC has reached a discharging limit L at the time t1 due to a dark current based on the battery module 110 having linear SOC characteristics, the BMS 120 does not have to monitor an SOC but may drive the starter motor 220 at the time t1 after the engine 240 of the vehicle is stopped so that the power generation module 210 may charge the battery module 110.

Likewise, when the power generation module 210 charges the battery module 110, when it is known that an SOC has reached the charging limit H at a time t2 due to the battery characteristics, the BMS 120 may stop driving of the power generation module 210 at the time t2 without having to monitor an SOC, thereby stopping charging of the battery module 110.

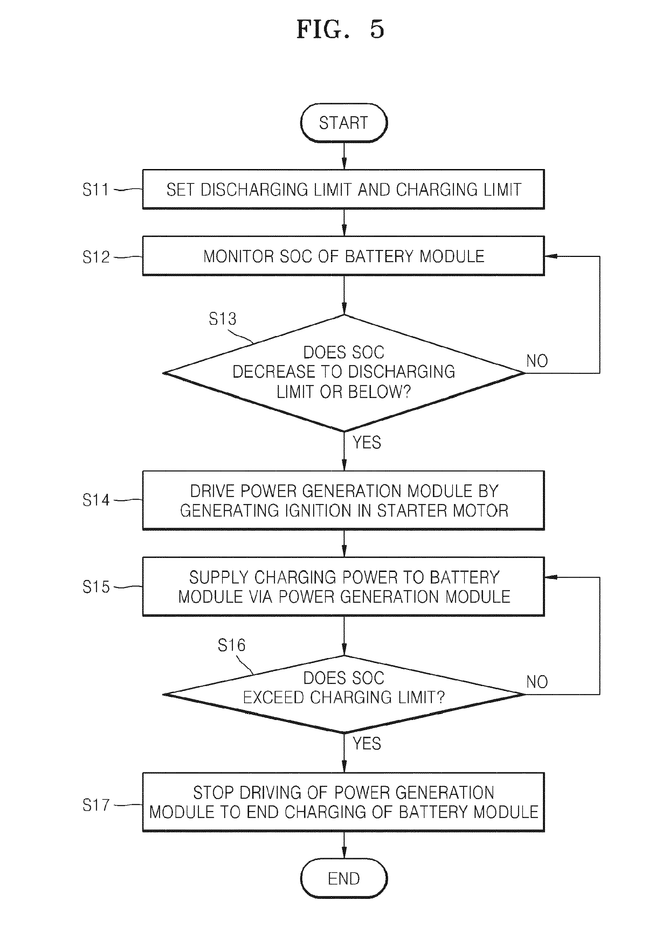

FIG. 5 is a flowchart illustrating a method of controlling a battery charging system, according to an embodiment of the present invention.

Referring to FIG. 5, first, a discharging limit of the BMS 120 is set when manufacturing a battery pack or by a user, in operation S11.

Next, the BMS 120 monitors an SOC of the battery module 110 that is discharged by a dark current after engine 240 of the vehicle is stopped, in operation S12.

Next, the BMS 120 senses whether an SOC of the battery module 110 is decreased to a discharging limit L or below in operation S13. If the SOC of the battery module 110 does not decrease to a discharging limit L, the BMS 20 continuously monitors an SOC of the battery module 110, but power does not need to be supplied to the battery module 110 at this time by the power generating means 210.

Otherwise, if the SOC is decreased to a discharging limit L or below, the BMS 120 generates a control signal indicating to drive the starter motor 220 so as to drive the power generation module 210 in operation S14.

Next, in operation S15, the power generation module 210 supplies charging power to the battery module 110.

Also, while charging continues, the BMS 120 senses whether the SOC of the battery module 110 exceeds a charging limit H in operation S16. If the BMS 120 does not exceed the charging limit H, the BMS 120 further monitors the SOC of the battery module 110.

Otherwise, if the SOC exceeds the charging limit H, the BMS 120 transmits a signal to the power generation module 210 to stop the driving thereof, thereby ending the charging of the battery module 110, in operation S17.

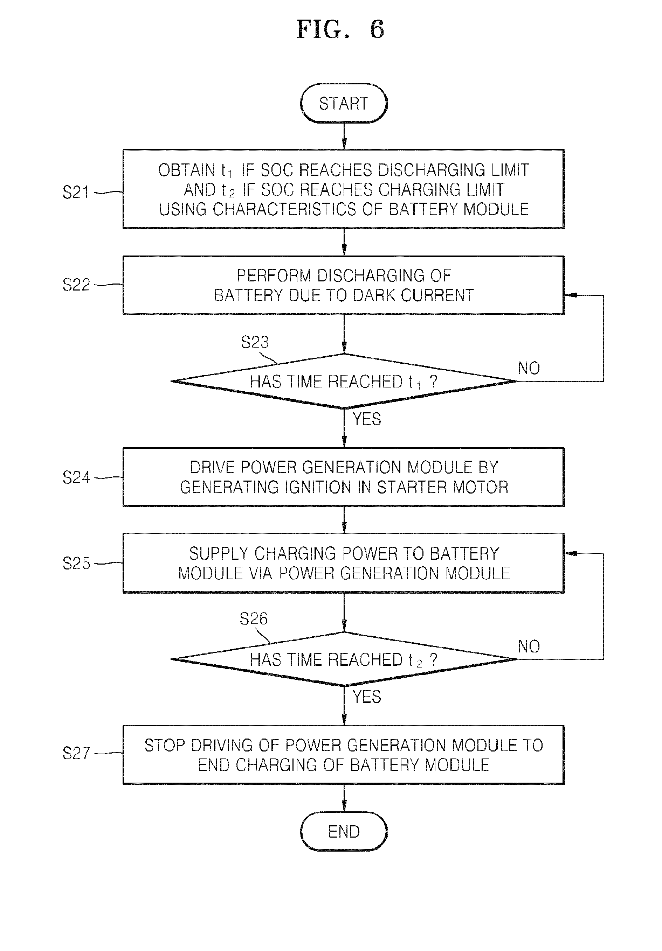

FIG. 6 is a flowchart illustrating a method of controlling a battery charging system, according to another embodiment of the present invention.

Referring to FIG. 6, first, in operation S21, a time t1 where an SOC becomes a discharging limit and a time t2 where an SOC becomes a charging limit are obtained by using characteristics of a battery module. Here, referring to FIG. 6, the battery module has linear SOC characteristics.

Next, discharging of a battery module is performed by a dark current, and an SOC of the battery module decreases linearly in operation S22.

Next, in operation S23, the BMS 120 senses whether the time t1 has been reached after the engine 240 is stopped. If the time t1 has not been reached, discharging of the battery module is further performed.

Otherwise, if the time t1 has been reached, the BMS 120 generates a control signal indicating to drive the starter motor 220, thereby driving the power generation module 210 in operation S24.

Next, in operation S25, the power generation module 210 supplies charging power to the battery module 110.

Next, in operation S26, the BMS 120 senses whether the time t2 has been reached. If the time t2 has not been reached, charging of the battery module 110 is further performed.

In operation S27, if the time t2 has been reached, the BMS 120 transmits a signal to the power generation module 210 to stop the driving thereof, thereby ending the charging of the battery module 110.

While this invention has been particularly shown and described with reference to exemplary embodiments thereof, it will be understood by those of ordinary skill in the art that various changes in form and details may be made therein without departing from the scope of the invention as defined by the appended claims. The exemplary embodiments should be considered in descriptive sense only and not for purposes of limitation. Descriptions of features or aspects within each embodiment should typically be considered as available for other similar features or aspects in other embodiments.

## Claims

1. A battery pack, comprising:
a secondary battery; and
a battery management system for monitoring a parameter representing use of the secondary battery;
in which the battery management system is arranged to determine whether the secondary battery requires charging by comparing the monitored parameter with a first predetermined value, and if it is determined that the secondary battery requires charging, the battery management system is arranged to control charging of the secondary battery by a power generating means;
wherein the first predetermined value is such that the secondary battery is capable of initialising the power generating means when the monitored parameter is equal to the first predetermined value.

2. A battery pack according to claim 1, wherein, before initialisation of the power generating means, no power is provided by the power generating means to the secondary battery.

3. A battery pack according to claim 1 or claim 2, wherein the monitored parameter corresponds to the state of charge of the secondary battery.

4. A battery pack according to claim 1, wherein the state of charge of the secondary battery varies linearly with time.

5. A battery pack according to claim 4, wherein the monitored parameter corresponds to the time which has elapsed since the secondary battery was charged to a predetermined level.

6. A battery pack according to any one of the preceding claims, wherein the battery management system is arranged to control the power generating means to stop charging the secondary battery when the monitored parameter is equal to a second predetermined value.

7. A system comprising:
the battery pack of any one of the preceding claims;
a power generation means arranged to supply charging power to the battery pack; and
an initialisation means coupled in parallel with the power generation means and arranged to initialise the power generation means on receipt of a control signal from the battery management system.

8. A system according to claim 7, wherein the initialisation means comprises the starter motor of a vehicle, and the power generation means is arranged to generate electrical power from the mechanical power provided by an engine of the vehicle.

9. A system according to claim 8, wherein the power generation means is arranged to generate electrical power from the mechanical power provided by an idle stop and go, ISG, engine.

10. A system according to claim 8 or 9, wherein when the monitored parameter of the secondary battery reaches the first predetermined value, discharging power from the secondary battery is supplied to the initialisation means.

11. A method of charging a battery, comprising:
monitoring a parameter representing use of a secondary battery;
determining whether the secondary battery requires charging by comparing the monitored parameter with a first predetermined value; and
if it is determined that the secondary battery requires charging, controlling charging of the secondary battery by a power generating means;
wherein the first predetermined value is such that the secondary battery is capable of initialising the power generating means when the monitored parameter is equal to the first predetermined value.

12. A method according to claim 11, wherein the monitored parameter corresponds to the state of charge of the secondary battery.

13. A method according to claim 11, wherein the monitored parameter corresponds to the time which has elapsed since the secondary battery was charged to a predetermined level.

14. A method according to any one of claims 11 to 13, wherein the battery management system is arranged to control the power generating means to stop charging the secondary battery when the monitored parameter is equal to a second predetermined value.
